# NEW EUROPEAN PATENT SPECIFICATION

(11) **EP 1 396 531 B2**
(45) Date of publication and mention of the opposition decision: **30.11.2016**
(45) Mention of the grant of the patent: 14.03.2007
(21) Application number: 03396079.0
(22) Date of filing: 05.09.2003
(51) Int. Cl.: C10G 3/00

(54) **Process for producing a hydrocarbon component of biological origin**
Vefahren zur Herstellung einer Kohlenwasserstoffkomponente biologischer Herkunft
Procédé de préparation d' un composé hydrocarburé d' origine biologique.

(30) Priority: 06.09.2002 FI 20021595; 06.09.2002 US 408301 P
(43) Date of publication of application: 10.03.2004
(73) Proprietor: Neste Oil Oyj, 06101 Porvoo (FI)
(72) Inventor: Jakkula, Juha, 04200 Kerava (FI); Niemi, Vesa, 6400 Porvoo (FI); Nikkonen, Jouko, 06650 Hamari (FI); Purola, Veli-Matti, 06650 Hamari (FI); Myllyoja, Jukka, 00940 Helsinki (FI); Aalto, Pekka, 06400 Porvoo (FI); Lehtonen, Juha, 06400 Porvoo (FI); Alopaeus, Ville, 00500 Helsinki (FI)
(74) Representative: Finnegan Europe LLP

(56) References cited:
- WO-A1-92//16601
- CZ-B6- 283 575
- FI-A- 933 982
- FI-B- 100 248
- FI-B- 20 021 595
- FR-A1- 2 607 803
- GB-A- 1 002 922
- US-A- 4 992 605
- US-A- 5 705 722
- US-A- 5 888 376
- US-A- 6 123 835
- US-A- 2001 027 937
- US-A1- 2001 027 937
- DATABASE WPI Section Ch, Week 199749 Derwent Publications Ltd., London, GB; Class D23, AN 1997-488372 XP002267286 & FI 100 248 B (NESTE OY) 31 October 1997 (1997-10-31)
- English Translation of E1
- J. GUSMAO ET AL.: 'Utilisation of vegetable oils as an alternative source for diesel-type fuel: Hydrocracking and reduced Ni/SiO² and sulphided Ni-Mo/y-Al²O³' CATALYSIS TODAY vol. 5, 1989, pages 533 - 544
- G. CECCHI ET AL.: 'Conversion des huiles végétales en carburants potentiels. Essais préléminaires' REVUE FRANÇAISE DES CORPS GRAS vol. 34, no. 9, 1987, pages 397 - 401
- J. RIBAMAR SEGUNDO DOS ANJOS ET AL.: 'Vegetable Oil Catalytic Breakdown' BOLETIM TECNICO DE PETROBRAS vol. 24, no. 2, 1981, pages 139 - 147
- English translation of E4
- J. RIBAMAR SEGUNDO DOS ANJOS ET AL.: 'Catalytic decomposition of vegetable oils' APPLIED CATALYSIS vol. 5, 1983, pages 299 - 308
- P.P. NUNES ET AL.: 'Hydrocraquage sous pression d'une huile de soja: procédé d'étude et allure générale de la transformation' REVUE DE L'INSTITUT FRANÇAIS DE PÉTROLE vol. 41, no. 3, 1986, pages 421 - 431
- English translation of E10
- W. BALDAUF, DR. ET AL.: 'VDI Berichte', vol. 1126, 1994, VEBA OEL AG, GEISENKIRCHEN pages 153 - 168
- English Translation of E12
- English translation of E13

## Description

### Technical field

The invention relates to an improved process for producing a hydrocarbon component of biological origin from biological starting materials such as vegetable oils, animal fats and similar materials, this component being particularly useful in diesel fuels.

### Prior art

Ever increasing interest is directed to the use of hydrocarbon components of biological origin in fuels since renewable biological starting materials that may replace fossil ones are available, and the use thereof is desirable. One of the aims is also to promote the exploitation of wastes containing biological raw materials like animal carcasses. Several prior art processes for producing fuels from starting materials originating from plants and animals are known.

FI 100248 discloses a two-step process for producing middle distillate from vegetable oil by hydrogenating the fatty acids or triglycerides of the vegetable oil to give n-paraffins and then by isomerizing said n-paraffins to obtain branched-chain paraffins. It was possible to improve the low temperature performance of the hydrocarbon component produced by hydrogenating and isomerizing according to this process. The product is proven useful in solvents and as a diesel fuel component without any blending restrictions.

Conversion of biomass feed stock is known from the document US 5,705,722 disclosing a process for producing additives suitable for diesel fuels that improve the cetane number thereof, the feed stock being, for instance, tall oil, tree oil from deciduous trees, animal fats and mixtures thereof. The biomass feed stock is hydroprocessed by contacting with gaseous hydrogen under hydroprocessing conditions in the presence of a catalyst. The product mixture thus obtained is separated into fractions giving a hydrocarbon component that boils in the boiling range of a diesel fuel. Due to poor low temperature performance thereof, the component may not be used at low temperatures.

The document GB 1 524 781 presents a method for producing hydrocarbons from vegetable oil. In this method, the vegetable oil feed stock is pyrolyzed in three zones at temperatures of 300-700 °C, in the presence of a catalyst. The hydrocarbons thus obtained are separated and purified.

Biological raw materials contain high amounts of oxygen that is converted to water, carbon monoxide and carbon dioxide during processing. Typically, the amount of water in vegetable oils varies between 7 and 11 % by weight, based on the feed stock. Moreover, such biological raw materials often contain nitrogen, sulphur and phosphorus that are known catalyst poisons and inhibitors inevitably reducing the service life of the catalyst and necessitating frequent regenerations thereof.

Biological starting materials may be pretreated with suitable methods such as thermally, chemically and mechanically prior to the hydrodeoxygenation step that breaks the structure thereof, the step being referred to herein as the HDO step. HDO means removal of oxygen by means of hydrogen, that is, oxygen is removed while breaking the structure of the material. Olefinic double bonds are hydrogenated and any sulphur and nitrogen compounds are removed. Sulphur removal is called hydrodesulphurization (HDS). Pretreatment and purity of the raw materials contribute to the service life of the catalyst.

Generally in the HDO/HDS step, hydrogen is mixed with the feed stock and then the mixture is passed through a catalyst bed as a co-current flow, either as a single phase or a two phase feed stock. After the HDO/HDS step, the product fraction is separated and passed to a separate isomerization reactor. An isomerization reactor for biological starting material is described in the literature (FI 100 248) as a co-current reactor.

Patent application FI 933982 discloses a process for producing a diesel fuel by hydrogenating a hydrocarbon feed, wherein the feed is passed as a co-current flow with hydrogen gas through a first hydrogenation zone, and thereafter the hydrocarbon effluent is further hydrogenated in a second hydrogenation zone by passing hydrogen gas to the second hydrogenation zone as a counter-current flow relative to the hydrocarbon effluent.

Typically in the HDO step, a NiMo or CoMo catalyst is used, these catalysts having some resistance to catalyst poisons. The reactions in the HDO step are highly exothermic and necessitate high amounts of hydrogen. As for the isomerizing step, noble metal catalysts are used, these catalysts being very expensive and extremely sensitive to catalyst poisons and water. In addition, biological components often give rise to precipitous by-products that may, for instance, cause a considerable pressure drop. So far, no process configuration for combining the HDO step of the biological starting material and the isomerization process thereof has been proposed in the field for producing high quality diesel components, wherein the properties of the biological raw material are taken into consideration for said configuration.

As on the basis of the above teachings may be seen, there is an obvious need for an improved and simplified process for producing a hydrocarbon component from biological raw materials, problems associated with the prior art solutions being eliminated or at least substantially reduced by said process.

### General description of the invention

An object of the invention is to provide a process for producing a hydrocarbon component from biological raw materials.

An object of the invention is also to provide a process for producing a hydrocarbon component from biological raw materials, said component being suitable as a diesel fuel or as a component thereof.

The process of the invention comprises at least two steps, the first one of which is a HDO step in which hydrogen gas and the biological raw material to be hydrogenated are passed as co-current or as counter-current flows to a hydrodeoxygenation catalyst bed system comprising two or more catalyst beds, one or more of which is operated using the counter-current flow principle, and the second one is an isomerization step utilizing the counter-current principle, a biological raw material serving as the feed stock.

Characteristic features of the process of the invention for producing a hydrocarbon component from biological raw materials are disclosed in the appended claims.

### Detailed description of the invention

It was surprisingly found that the problems of the prior art processes may be avoided or at least substantially reduced by the process of the invention having at least two steps. In the process of the invention, the counter-current flow principle is utilized in connection with a new type of feed stock material. In the first step of the process, i.e. in the hydrodeoxygenation step, hereinafter referred to as the HDO step, the structure of the biological component is decomposed, oxygen, nitrogen, phosphorus and sulphur compounds, and light hydrocarbons as gas are removed, and the olefinic bonds are hydrogenated. In the second step of the process, i.e. in the so-called isomerization step, isomerization is carried out for branching the hydrocarbon chain and improving the performance of the paraffin at low temperatures.

As the feed stock, a biological raw material containing fatty acids and/or fatty acid esters that originate from plants, animals or fish is used, said biomaterial being selected from the group consisting of vegetable oils/fats, animal fats, fish oils and mixtures thereof. Examples of suitable biomaterials are wood-based and other plant-based fats and oils such as rapeseed oil, colza oil, canola oil, tall oil, sunflower oil, soybean oil, hempseed oil, olive oil, linseed oil, mustard oil, palm oil, peanut oil, castor oil, coconut oil, as well as fats contained in plants bred by means of gene manipulation, animal-based fats such as lard, tallow, train oil, and fats contained in milk, as well as recycled fats of the food industry and mixtures of the above.

The basic structural unit of a typical vegetable or animal fat useful as the feed stock is a triglyceride, that is a triester of glycerol with three fatty acid molecules, having the structure presented in the following formula I: 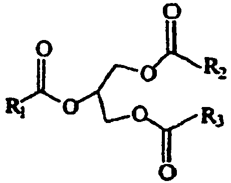 wherein R₁, R₂ and R₃ are hydrocarbon chains, and R₁, R₂, and R₃ may be saturated or unsaturated C₆ - C₂₄ alkyl groups. The fatty acid composition may vary considerably in feed stocks of different origin.

Mixtures of a biological raw material and hydrocarbon may also serve as the feed, and further, the hydrocarbon component obtained as the product may, if desired, be recycled back to the feed to control the exothermal character of the reactions.

In the first step i.e. HDO step of the process of the invention, hydrogen gas and the biological component to be hydrogenated are passed to a HDO catalyst bed system comprising two or more catalyst beds, one or more of the beds being operated using the counter-current flow principle. In the HDO step, the pressure varies between 50 and 100 bar, and the temperature varies in the range of 300-400 °C. In the HDO step, known hydrogenation catalysts containing metals from Group VIII and/or VIB of the Periodic System may be used. Preferably, the hydrogenation catalysts are supported Pd, Pt, Ni, NiMo or a CoMo catalysts, the support being alumina and/or silica, as described for instance in FI 100248. Typically, Ni-Mo/Al₂O₃ and CoMo/Al₂O₃ catalysts are used.

Prior to the HDO step, the biological raw material is treated by prehydrogenation under milder conditions thus avoiding side reactions of the double bonds. Such prehydrogenation is carried out in the presence of a prehydrogenation catalyst at a temperature between 150 and 250 °C and at a hydrogen pressure between 10 and 100 bar. The catalyst may contain metals from Group VIII and/or VIB of the Periodic System. Preferably, the prehydrogenation catalyst is a supported Pd, Pt, Ni, NiMo or a CoMo catalyst, the support being alumina and/or silica.

Typically, such prehydrogenation is carried out in co-current manner. When the prehydrogenation is almost complete, then white, saturated triglyceride, solid at room temperature and having an iodine number of below 2, is obtained.

A gaseous stream from the HDO step containing hydrogen is cooled and then carbon monoxide, carbon dioxide, nitrogen, phosphorus and sulphur compounds, gaseous light hydrocarbons and other impurities are removed therefrom. After compressing, the purified hydrogen or recycled hydrogen is returned back to the first catalyst bed and/or between the catalyst beds to make up for the withdrawn gas stream. Water is removed from the condensed liquid. The liquid is passed to the first catalyst bed or between the catalyst beds.

In the HDO step, a liquid stream may optionally be withdrawn from between and/or after the catalyst beds. The liquid stream is cooled and water is removed therefrom, and then it is returned back on the catalyst beds.

Optionally, a product from the isomerization step or another suitable hydrocarbon may also be added to the feed of the HDO step.

After the HDO step, the product is subjected to an isomerization step. It is substantial for the process that the impurities are removed as completely as possible before the hydrocarbons are contacted with the isomerization catalyst. The isomerization step comprises an optional stripping step, wherein the reaction product from the HDO step may be purified by stripping with water vapour or a suitable gas such as light hydrocarbon, nitrogen or hydrogen. The optional stripping step is carried out in counter-current manner in a unit upstream of the isomerization catalyst, wherein the gas and liquid are contacted with each other, or before the actual isomerization reactor in a separate stripping unit utilizing counter-current principle.

After the stripping step the hydrogen gas and the hydrogenated biological component, and optionally an n-paraffin mixture, are passed to a reactive isomerization unit comprising one or several catalyst bed(s). The catalyst beds of the isomerization step operate in counter-current manner.

It is essential for the process that the counter-current flow principle is applied in the isomerization step.

The isomerization step and the HDO step may be carried out in the same pressure vessel or in separate pressure vessels. The prehydrogenation may be carried out in a separate pressure vessel or in the same pressure vessel as the HDO and isomerization steps.

In the isomerization step, the pressure varies in the range of 20-100 bar, the temperature being between 300 and 400 °C.

In the isomerization step, isomerization catalysts known as such may be used, as described e.g. in the document FI 100248. Suitable isomerization catalysts contain molecular sieve and/or a metal from Group VIII and/or a carrier. Preferably, the isomerization catalyst contains SAPO-11 or SAPO-41 or ZSM-22 or ZSM-23 or ferrierite and Pt, Pd or Ni and Al₂O₃ or SiO₂. Typical isomerization catalysts are, for example, Pt/SAPO-11/Al₂O₃, Pt/ZSM-22/Al₂O₃, Pt/ZSM-23/Al₂O₃ and Pt/SAPO-11/SiO₂.

As the product, a high quality hydrocarbon component of biological origin, useful as a diesel fuel or a component thereof, is obtained, the density, cetane number and performance at low temperature of said hydrocarbon component being excellent.

### Figures

Figure 1 schematically shows the operation of a process wherein an HDO step is run in cocurrent manner and the isomerization step in counter-current manner.
Figure 2 schematically shows another process wherein the first catalyst bed of the HDO step is shown as co-current and the second as counter-current; the isomerization step is shown as countercurrent.
Figure 3 schematically shows a third process illustrating the HDO step as co-current and the isomerization as counter-current. According to the process, after the HDO step, a liquid stream is withdrawn and then purified and returned back to the isomerization step.
Figure 4 schematically shows a process comprising prehydrogenation prior to the HDO step.

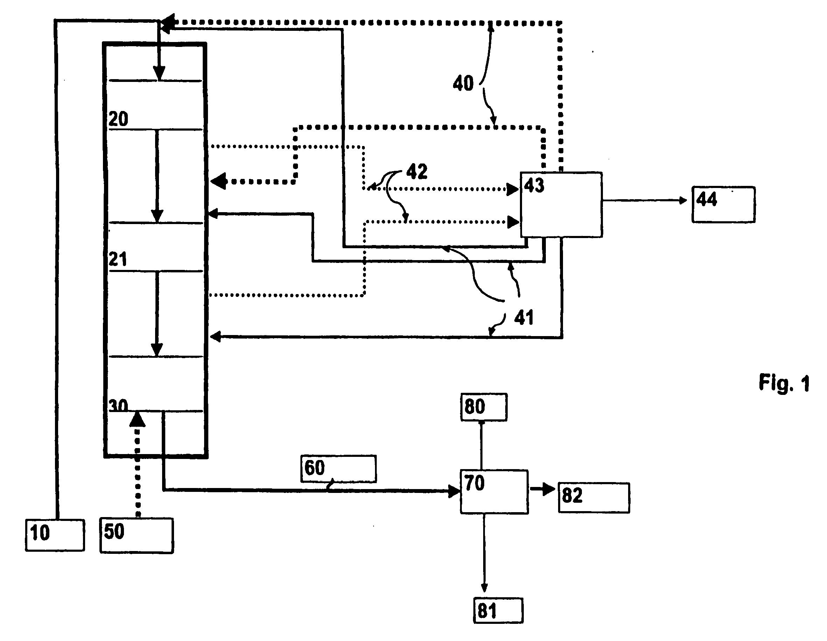

Figure 1 shows a process in which the HDO step is run in co-current manner and the isomerization step is run in counter-current manner. Both the HDO step and the isomerization step may be carried out in the same pressure vessel or in separate pressure vessels.

Biological starting material 10 is passed to a first HDO catalyst bed 20 where condensed hydrocarbon is also passed as a recycled stream 41 having water removed therefrom. Recycled hydrogen 40 is mixed with the feed 10, and the recycled stream 41.

A gas stream 42 is withdrawn both after the last HDO catalyst bed 21 and between the catalyst beds 20 and 21, and further passed to a process unit 43, where said withdrawn gas streams are cooled and partly condensed, water is separated and purified hydrogen gas is compressed to give recycled hydrogen 40. Light hydrocarbons, water, carbon monoxide, carbon dioxide, nitrogen, sulphur and phosphorus compounds and other impurities are removed as stream 44. Condensed hydrocarbons are returned as cooling streams (recycled streams) 41 to suitable catalyst beds. Recycled hydrogen 40 is partitioned between separate catalyst beds.

The product from the HDO step is passed to an isomerization catalyst bed 30 where fresh hydrogen is passed in counter-current manner as a stream 50, the cooling being carried out by means of the stream 41. After the isomerization, the products are passed as a stream 60 to product separation 70 where light components are separated as a stream 80, heavy components as a stream 81 and the hydrocarbon component/biodiesel product as a stream 82.

The presentation of Figure 1 is also valid for solutions wherein biological raw material is mixed with hydrocarbon. In the solution shown, the HDO step catalyst bed system may comprise one or more beds. In this case, streams withdrawn from between and recycled back to the catalyst beds may be eliminated, or such streams may be provided prior to or after each catalyst bed. In the process unit 43, deleterious organic or inorganic acids may also be removed from the condensed hydrocarbon followed by recycling of the hydrocarbon stream back to the process. The isomerization step may also comprise one or several catalyst beds.

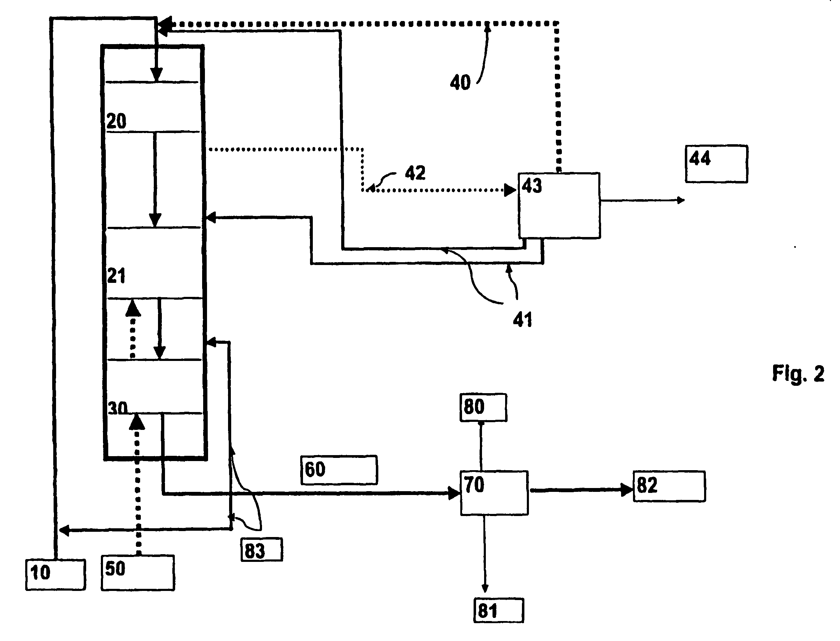

Figure 2 shows another process. In the Figure, the first catalyst bed 20 of the HDO step is presented as operated in co-current fashion. After the cocurrent catalyst bed, a counter-current HDO catalyst bed 21 is shown. The isomerization step 30 is shown as operated in counter-current manner.

Biological starting material 10 is passed to the first HDO catalyst bed 20. Condensed hydrocarbon is also passed to the first catalyst bed as a stream 41 having water removed therefrom. Purification and cooling of the withdrawn streams are carried out at a unit 43, and then the streams are returned to the process as in Figure 1.

Recycled hydrogen 40 is mixed with the feed 10 and with the recycled stream 41. In this embodiment, the feed is also mixed with an isomerization product 83 to dilute the feed to the HDO step. Impurities dissolved in the HDO product are removed therefrom by counter-current HDO bed 21, thus purifying the feed to the isomerization step.

A gas stream 42 is withdrawn upstream of the counter-current HDO catalyst bed 21 and passed to the process unit 43, where withdrawn gas streams are cooled and condensed and purified as described in Figure 1.

The product from the HDO step is passed to the isomerization catalyst bed, where isomerization is carried out as described in Figure 1.

The presentation of Figure 2 is also valid for solutions comprising one or more catalyst bed(s) for the HDO step. In this case, streams withdrawn between the catalyst beds and recycled streams may be eliminated, or such streams may be provided prior to or after each catalyst bed. In the process unit 43, deleterious organic or inorganic acids may also be removed from the condensed hydrocarbon followed by recycling of the hydrocarbon stream back to the process. The isomerization step may also comprise one or several catalyst beds.

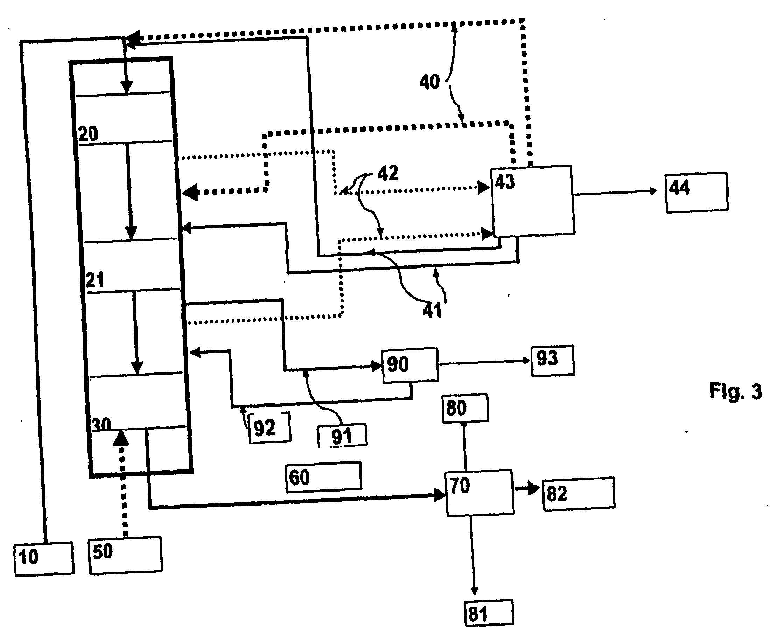

Figure 3 shows still another process in which the HDO step is presented as operated in co-current and the isomerization in counter-current fashion. In this embodiment, a liquid stream is withdrawn downstream of the HDO step, followed by purification of said stream and recycling thereof back to the isomerization step.

This embodiment corresponds to that of Figure 1 except that a liquid stream 91 is withdrawn downstream of the HDO catalyst bed 21, the stream 91 being passed to a purification step 90 and then, after purification and cooling, it is recycled back to the catalyst bed 30 of the isomerization step as a stream 92. In the purification unit 90, the liquid stream is cooled. Light hydrocarbons, hydrogen, water, carbon monoxide, carbon dioxide, nitrogen, sulphur and phosphorus compounds and other impurities are removed as a stream 93. Hydrocarbons are returned as cooling streams 92 to the catalyst beds of the isomerization step.

The presentation of Figure 3 is also valid for solutions comprising one or more catalyst bed(s) for the HDO step. In this case, streams withdrawn between the catalyst beds and recycled streams may be eliminated, or such streams may be provided prior to or after each catalyst bed. The solution also includes the cases wherein a liquid stream may be withdrawn from various places of the HDO step and returned between other catalyst beds. Hydrogen and other gaseous components separated in the purification step 90 may optionally be passed to the step 43 for purification. In the process step 43 and 90, deleterious organic or inorganic acids may also be removed from the hydrocarbon prior to returning said hydrocarbon stream to the process.

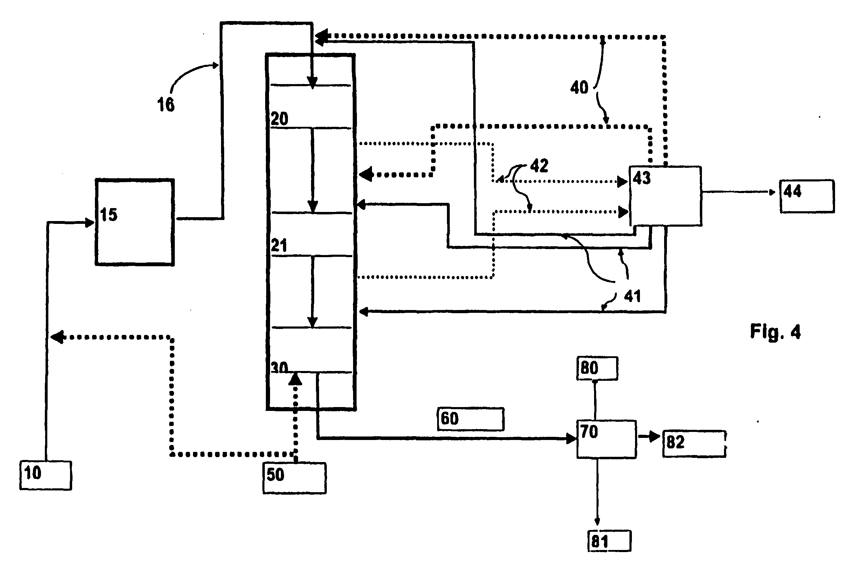

Figure 4 shows a process illustrating a co-current prehydrogenation preceding the HDO step, the HDO step being carried out in co-current manner and the isomerization step in counter-current manner.

Biological starting material 10 mixed with fresh hydrogen as a stream 50 is passed to a prehydrogenation reactor 15, and thereafter, the prehydrogenated product is passed as a stream 16 from the reactor 15 to a first HDO catalyst bed 20 also receiving as a recycled stream 41 condensed hydrocarbon having water removed therefrom. Recycled hydrogen 40 is mixed with the biological raw material feed 10 and the recycled stream 41. Instead of fresh hydrogen, the biological raw material 10 may also be mixed with recycled hydrogen 40 prior to the prehydrogenation. Typically, the prehydrogenation reactor 15 is a co-current fixed bed reactor.

Downstream of the last HDO catalyst bed 21 and between the catalyst beds 20 and 21, a gas stream 42 is withdrawn and passed to the process step 43, wherein said withdrawn gas streams are cooled and partly condensed, water is separated and the purified hydrogen gas is compressed to give recycled hydrogen 40. Light hydrocarbons, water, carbon monoxide, carbon dioxide, nitrogen, sulphur and phosphorus compounds and other impurities are removed as a stream 44. Condensed hydrocarbons are returned as cooling streams (recycled streams) 41 to suitable catalyst beds. Recycled hydrogen 40 is partitioned between various catalyst beds.

The product from the HDO step is passed to the catalyst bed 30 of the isomerization step also receiving fresh hydrogen in counter-current manner as a stream 50, the cooling being carried out by means of the stream 41. After isomerization, the products are passed as a stream 60 to product separation 70, where light components are separated as a stream 80, heavy components as a stream 81 and the hydrocarbon component/biodiesel product as a stream 82.

Figure 4 presents an embodiment having the prehydrogenation connected to the embodiment of Figure 1. The prehydrogenation may also be connected to the embodiments of Figures 2 and 3 and to the variations of the above embodiments. The hydrogenation reactor may also be fluidized, have a mobilized bed, be a mixed container reactor of the CSTR type, or a fixed bed counter-current reactor.

In the process of the invention, the counter-current operation can be utilized for processing a novel type of raw material. The co-current operation typically used in the HDO step results in low partial pressure of hydrogen, a great gas stream and poisoning of the catalyst at the downstream end of the catalyst bed. In the HDO step, the poisoning of the catalyst is accelerated by water, carbon monoxide and carbon dioxide. In addition, the nitrogen, sulphur and phosphorus compounds reacted in the HDO step become part of the gaseous phase. Catalyst poisons can be removed by utilizing the counter-current operation in the isomerization and/or HDO step. The service life of the catalysts may be extended both in the HDO step and the isomerization step by removing by-products produced from the withdrawn streams and from the streams to be recycled. The counter-current operation may be carried out in a layer packed with a catalyst, in a layer filled with inert packings or simply by contacting the gas from the latter process steps with the liquid stream from one or more of the preceding process steps.

A major part of the HDO treated product is also vaporized under the conditions of the HDO step. In some cases the amount of the vaporized liquid is so great that the temperature of the reactor may be controlled by withdrawn and recycled streams, or, alternatively, the temperature control may be achieved by extracting liquid from the process, cooling it and returning it to the process. Water is separated from the condensed liquid, water-soluble impurities being entrained therewith. Condensed hydrocarbon may also be purified with conventional methods prior to recycling back to the process. One example is the neutralization of the condensed harmful acids from the hydrocarbon streams and washing with water prior to recycling.

With the prehydrogenation step, side reactions of the double bonds such as polymerization, ring formation and aromatization may be reduced, such side reactions causing the catalyst to coke, and thus shortening the operation period. The yield of the final product (diesel) is also considerably improved by the prehydrogenation.

In the isomerization step, gas and liquid move first as counter-current flows to an optional stripping unit. The counter-current operation may also be applied, to one or several catalyst beds. This way the valuable noble metal catalyst can be effectively protected. Fresh hydrogen from the isomerization step can be passed directly to the HDO reactor without compression. The isomerization pressure may also be lower than that in the HDO step. In the isomerization, low amounts of hydrogen are consumed meaning that no recycling of hydrogen is necessarily required in the isomerization. Significant savings in the investment costs are possible by placing the HDO and isomerization steps in the same housing.

Advantages of the simplified process of the invention also include the protection of the isomerization catalyst, thus preventing it from deactivating. Due to the counter-current operation principle the water content in the liquid phase is also reduced. Water is removed prior to contacting the hydrocarbon with the isomerization catalyst. This also reduces the deactivation of the isomerization catalyst.

Moreover, it is surprising that the use of a biological feed stock as defined in the claims in the process is possible, which feed stock may originate from several different sources, and the composition of the feed may vary considerably without affecting the quality of the end product.

The low temperature performance of the product produced with the process of the invention is considerably better than that of a products obtained using prior art processes. The turbidity point of the product may even be below -30 °C, and accordingly, it is also well suited to be used in demanding cold conditions.

### Reference Example

Prehydrogenation of alkali-refined rapeseed oil [0064] Prehydrogenations were carried out in an autoclave at the temperature of 100-290 °C and at the pressure of 30-35 bar. Alkali-refined rapeseed oil served as the feed stock. Table 1 shows some properties of the rapeseed oil feed and the prehydrogenated product. As may be seen from the properties of the prehydrogenated product, the triglyceride composition remains nearly unchanged (GPC = gel permeation chromatography) and the double bonds of the fatty acid chains are nearly completely saturated (iodine number).

**Table 1**

| Properties of the prehydrogenated product | | | |
|---|---|---|---|
| **Analysis** | **Rapeseed oil feed** | **Prehydrogenated product/150°C** | **Prehydrogenated product/250°C** |
| GPC analysis | | | |
| - oligomers, % | 0 | 0 | 0,2 |
| - triglycerides, % | 97 | 95,9 | 94,9 |
| - diglycerides, % | 2,3 | 3,1 | 3,5 |
| - monoglycerides, % | 0 | 0 | 0 |
| - fatty acids or hydrocarbons, % | 0,7 | 0,9 | 1,3 |
| Iodine number | 112 | 1 | 2 |

## Claims

1. Process for producing a hydrocarbon component of biological origin,
**characterized in that** the process comprises
at least two steps, the first one of which is a hydrodeoxygenation step and the second one is an isomerization step comprising an optional stripping step, and
in the hydrodeoxygenation step hydrogen gas and the biological raw material to be hydrogenated are passed as co-current or as counter-current flows to a hydrodeoxygenation catalyst bed system comprising two or more catalyst beds, one or more of which is operated using the counter-current flow principle, the temperature of the hydrodeoxygenation step varying between 300 and 400 °C and the pressure varying between 50 and 100 bar, and
after the hydrodeoxygenation step the product is subjected to the isomerization step, wherein the isomerization step is operated using the counter-current flow principle, the temperature of the isomerization step varying in the range of 300 - 400 °C and pressure 20 - 100 bar, and
that a biological raw material selected from vegetable oils/fats, animal fats, fish oils and mixtures thereof, containing fatty acids and/or fatty acid esters serves as the feed stock, and the biological raw material is subjected to prehydrogenation prior to the hydrodeoxygenation step and the prehydrogenation is carried out at a pressure of 10 - 100 bar and at a temperature of 150 - 250 °C.

2. Process according to claim 1, **characterized in that** wood-based or plant-based fats and oils, fats contained in plants bred by means of gene manipulation, animal-based fats, recycled fats of the food industry or mixtures of the above are used as the feed stock.

3. Process according to claim 1 or 2, **characterized in that** rapeseed oil, colza oil, canola oil, tall oil, sunflower oil, soybean oil, hempseed oil, olive oil, linseed oil, mustard oil, palm oil, peanut oil, castor oil, coconut oil, lard, tallow, train oil or fats contained in milk are used as the feed stock.

4. Process according to any one of claims 1-3, **characterized in that** a mixture of a biological raw material and a hydrocarbon/hydrocarbons is used as the feed stock.

5. Process according to any of claims 1-4, **characterized in that** the gaseous stream from the hydrodeoxygenation step is cooled, carbon monoxide, carbon dioxide, nitrogen, phosphorus and sulphur compounds, gaseous light hydrocarbons and other impurities are removed therefrom, and then the hydrogen thus purified is recycled back to the hydrodeoxygenation or isomerization step.

6. Process according to claim 5, **characterized in that** water is removed from the hydrocarbon condensed by cooling prior to recycling it back to the hydrodeoxygenation step.

7. Process according to any one of claims 1-6, **characterized in that** a liquid stream is withdrawn from the process downstream of one or several catalyst bed(s) of the hydrodeoxygenation step, which liquid stream is then cooled and water and water soluble impurities are removed therefrom, and the purified liquid stream is recycled back to the hydrodeoxygenation or isomerization step.

8. Process according to any one of claims 1-7, **characterized in that** after the hydrodeoxygenation step, hydrogen gas, the product, hydrogen gas and optionally a hydrocarbon mixture are passed as counter-current flows to the isomerization step.

9. Process according to any one of claims 1-8, **characterized in that** in the isomerization step the pressure is higher than in the hydrodeoxygenation step.

10. Process according to any one of claims 1-9, **characterized in that** the hydrodeoxygenation and the isomerization steps are carried out in the same pressure vessel or in separate pressure vessels.

11. Process according to any one of claims 1-10, **characterized in that** the prehydrogenation is carried out in the same pressure vessel as the hydrodeoxygenation and isomerization steps, or in a separate pressure vessel.

12. Process according to any one of claims 1-11, **characterized in that** the prehydrogenation and/or hydrodeoxygenation is carried out in the presence of a hydrogenation catalyst, said hydrogenation catalyst containing a metal from the Group VIII and/or VIB of the Periodic System.

13. Process according to claim 12, **characterized in that** the hydrogenation catalyst is a supported Pd, Pt, Ni, NiMo or a CoMo catalyst, the support being alumina and/or silica.

14. Process according to any one of claims 1-13, **characterized in that** an isomerization catalyst is used in the isomerization step, and the isomerization catalyst contains molecular sieve.

15. Process according to claim 14, **characterized in that** metal from the Element Group VIII has been added to the isomerization catalyst.

16. Process according to claim 14 or 15, **characterized in that** the isomerization catalyst contains Al₂O₃ or SiO₂.

17. Process according to any one of claims 14-16, **characterized in that** the isomerization catalyst contains SAPO-11 or SAPO-41 or ZSM-22 or ZSM-23 or ferrierite and Pt or Pd or Ni and Al₂O₃ or SiO₂.

## Patentansprüche

1. Verfahren zur Herstellung einer Kohlenwasserstoffkomponente biologischen Ursprungs,
**dadurch gekennzeichnet, dass** das Verfahren
mindestens zwei Schritte umfasst, wobei der erste ein Hydrodeoxygenierungsschritt und der zweite ein Isomerisierungsschritt ist, der einen optionalen Strippingschritt umfasst, und
in dem Hydrodeoxygenierungsschritt Wasserstoffgas und der biologische Rohstoff, die zu hydrieren sind, als Gleichstrom oder als Gegenstrom an ein Katalysatorbettsystem, das zwei oder mehr Katalysatorbetten umfasst, wobei eines oder mehrere nach dem Gegenstromprinzip betrieben wird, zur Hydrodeoxygenierung weitergegeben werden, wobei die Temperatur des Schritts zur Hydrodeoxygenierung zwischen 300 und 400 °C variiert und der Druck zwischen 50 und 100 bar variiert, und
das Produkt nach dem Hydrodeoxygenierungsschritt dem Isomerisierungsschritt unterzogen wird, wobei der Isomerisierungsschritt nach dem Gegenstromprinzip betrieben wird, wobei die Temperatur des Isomerisierungsschritts zwischen 300 - 400 °C variiert und der Druck zwischen 20 - 100 bar variiert, und
**dadurch gekennzeichnet, dass** ein biologische Rohstoff, der aus pflanzlichen Ölen/Fetten, tierischen Fetten, Fischölen und einer Mischung daraus ausgewählt wird und die Fettsäuren und/oder Fettsäureester enthält, als Grundstoff dient und der biologische Rohstoff vor dem Hydrodeoxygenierungsschritt einer Vorhydrierung unterzogen wird und die Vorhydrierung bei einem Druck von 10 - 100 bar und einer Temperatur 150 - 250 °C durchgeführt wird.

2. Verfahren nach Anspruch 1, **dadurch gekennzeichnet, dass** Fette und Öle auf Holz- oder Pflanzenbasis, Fette, die in durch Genmanipulation gezüchteten Pflanzen enthalten sind, tierische Fette, wiederverwertete Fette aus der Lebensmittelindustrie und Mischungen der oben Genannten als Grundstoff verwendet werden.

3. Verfahren nach Anspruch 1 oder 2, **dadurch gekennzeichnet, dass** Öl aus Rübsamen, Kolzaöl, Rapsöl, Kiefernöl, Sonnenblumenöl, Sojaöl, Hanföl, Olivenöl, Leinöl, Senföl, Palmöl, Erdnussöl, Rizinusöl, Kokosnussöl, Schmalz, Talg, Tran oder Fette, die in Milch enthalten sind, als Grundstoff verwendet werden.

4. Verfahren nach einem der Ansprüche 1-3, **dadurch gekennzeichnet, dass** eine Mischung aus einem biologischen Rohstoff und einem Kohlenwasserstoff/Kohlenwasserstoffen als Grundstoff verwendet wird.

5. Verfahren nach einem der Ansprüche 1-4, **dadurch gekennzeichnet, dass** der gasförmige Strom aus dem Hydrodeoxygenierungsschritt gekühlt wird, Verbindungen aus Kohlenmonoxid, Kohlendioxid, Stickstoff, Phosphor und Schwefel, gasförmige leichte Kohlenwasserstoffe und andere Verunreinigungen daraus entfernt werden und dann der so gereinigte Wasserstoff zum Hydrodeoxygenierungsschritt oder Isomerisierungsschritt zurückgeführt wird.

6. Verfahren nach Anspruch 5, **dadurch gekennzeichnet, dass** Wasser aus dem Kohlenwasserstoff, das durch Kühlung kondensiert wird, bevor es zum Hydrodeoxygenierungsschritt zurückgeführt wird, entfernt wird.

7. Verfahren nach einem der Ansprüche 1-6, **dadurch gekennzeichnet, dass** ein Flüssigkeitsstrom aus dem Verfahren nach einem oder mehreren Katalysatorbetten des Hydrodeoxygenierungsschritts entnommen wird, wobei der Flüssigkeitsstrom dann gekühlt wird und Wasser und wasserlösliche Verunreinigungen daraus entfernt werden und der gereinigte Flüssigkeitsstrom in den Hydrodeoxygenierungsschritt oder Isomerisierungsschritt zurückgeführt wird.

8. Verfahren nach einem der Ansprüche 1-7, **dadurch gekennzeichnet, dass** nach dem Hydrodeoxygenierungsschritt Wasserstoffgas, das Produkt, Wasserstoffgas und optional eine Kohlenwasserstoffmischung als Gegenströme an den Isomerisierungsschritt weitergegeben werden.

9. Verfahren nach einem der Ansprüche 1-8, **dadurch gekennzeichnet, dass** in dem Isomerisierungsschritt der Druck höher ist als in dem Hydrodeoxygenierungsschritt.

10. Verfahren nach einem der Ansprüche 1-9, **dadurch gekennzeichnet, dass** der Hydrodeoxygenierungsschritt und der Isomerisierungsschritt in demselben Druckbehälter oder in getrennten Druckbehältern durchgeführt werden.

11. Verfahren nach einem der Ansprüche 1-10, **dadurch gekennzeichnet, dass** die Vorhydrierung in demselben Druckbehälter durchgeführt wird wie der Hydrodeoxygenierungsschritt und der Isomerisierungsschritt, oder in einem getrennten Behälter.

12. Verfahren nach einem der Ansprüche 1-11, **dadurch gekennzeichnet, dass** die Vorhydrierung und/oder die Hydrodeoxygenierung im Vorhandensein eines Hydrierkatalysators durchgeführt wird, wobei der Hydrierkatalysator ein Metall aus der Gruppe VIII und/oder der Chalkogene des Periodensystems der Elemente enthält.

13. Verfahren nach Anspruch 12, **dadurch gekennzeichnet, dass** der Hydrierkatalysator ein Pd-, Pt, Ni, NiMo- oder ein CoMo-Katalysator mit Trägerstoff ist, wobei der Träger Aluminiumoxid oder Kieselsäure ist.

14. Verfahren nach einem der Ansprüche 1-13, **dadurch gekennzeichnet, dass** ein Isomerisierungskatalysator in dem Isomerisierungsschritt verwendet wird und der Isomerisierungskatalysator ein Molekularsieb enthält.

15. Verfahren nach Anspruch 14, **dadurch gekennzeichnet, dass** Metall aus der Elementgruppe VIII zum dem Isomerisierungskatalysator hinzugefügt wurde.

16. Verfahren nach Anspruch 14 oder 15, **dadurch gekennzeichnet, dass** der Isomerisierungskatalysator Al₂O₃ oder SiO₂ enthält.

17. Verfahren nach einem der Ansprüche 14-16, **dadurch gekennzeichnet, dass** der Isomerisierungskatalysator SAPO-11 oder SAPO-41 oder ZSM-22 oder ZSM-23 oder Ferrierit und Pt oder Pd oder Ni und Al₂O₃ oder SiO₂ enthält.

## Revendications

1. Procédé de fabrication d'un composant hydrocarboné d'origine biologique, **caractérisé en ce que** le procédé comprend
au moins deux étapes, dont la première est une étape d'hydrodésoxygénation et la seconde est une étape d'isomérisation comprenant une étape de décapage facultative, et
dans l'étape d'hydrodésoxygénation, on fait passer l'hydrogène gazeux et la matière première biologique à hydrogéner sous forme de co-courant ou bien tandis que le contre-courant s'écoule vers un système de lit de catalyseur d'hydrodésoxygénation comprenant deux ou plusieurs lits catalytiques, dont l'un ou plusieurs d'entre eux est actionné selon le principe de circulation à contre-courant, la température de l'étape d'hydrodésoxygénation variant entre 300 et 400°C et la pression variant entre 50 et 100 bar, et
après l'étape d'hydrodésoxygénation, le produit est soumis à l'étape d'isomérisation, où l'étape d'isomérisation suit le principe d'écoulement à contre-courant, la température de l'étape d'isomérisation variant dans la plage de 300 à 400 °C et à une pression 20-100 bar, et
qu'une matière première biologique choisie parmi les huiles/graisses végétales, les graisses animales, les huiles de poisson et leurs mélanges, contenant des acides gras et/ou esters d'acides gras sert de charge d'alimentation, et la matière première biologique est soumise à une préhydrogénation avant l'étape d'hydrodésoxygénation et la préhydrogénation est effectuée à une pression de 10-100 bar et à une température de 150-250°C.

2. Procédé selon la revendication 1, **caractérisé en ce que** les graisses et les huiles à base de bois ou à base de plantes, les graisses contenues dans les plantes élevées au moyen de la manipulation génétique, les graisses d'origine animale, les graisses recyclées de l'industrie alimentaire ou des mélanges de ce qui précède sont utilisées comme charge d'alimentation.

3. Procédé selon les revendications 1 ou 2, **caractérisé en ce que** l'huile de colza, l'huile de canola, le tallol, l'huile de tournesol, l'huile de soja, l'huile de chanvre, l'huile d'olive, l'huile de lin, l'huile de moutarde, l'huile de palme, l'huile d'arachide, l'huile de ricin, l'huile de noix de coco, le saindoux, le suif, l'huile de baleine ou les graisses contenues dans le lait sont utilisés comme charge d'alimentation.

4. Procédé selon l'une quelconque des revendications 1-3, **caractérisé en ce qu'**un mélange de matières premières biologiques et un ou plusieurs hydrocarbures sont utilisés comme charge d'alimentation.

5. Procédé selon l'une quelconque des revendications 1-4, **caractérisé en ce que** le courant gazeux provenant de l'étape d'hydrodésoxygénation est refroidi, le monoxyde de carbone, le dioxyde de carbone, l'azote, les composés de phosphore et de soufre, les hydrocarbures légers gazeux et les autres impuretés sont retirés de celui-ci, puis l'hydrogène ainsi purifié est recyclé dans l'étape d'hydrodésoxygénation ou d'isomérisation.

6. Procédé selon la revendication 5, **caractérisé en ce que** l'eau est éliminée de l'hydrocarbure condensé par refroidissement avant de le recycler vers l'étape d'hydrodésoxygénation.

7. Procédé selon l'une quelconque des revendications 1-6, **caractérisé en ce qu'**un courant de liquide est soutiré du procédé en aval d'un ou plusieurs lits catalytiques de l'étape d'hydrodésoxygénation, lequel courant liquide est ensuite refroidi, avant d'en retirer l'eau et les impuretés solubles dans l'eau, et le courant liquide purifié est recyclé vers l'étape d'hydrodésoxygénation ou d'isomérisation.

8. Procédé selon l'une quelconque des revendications 1-7, **caractérisé en ce qu'**après l'étape d'hydrodésoxygénation, on fait passer l'hydrogène gazeux, le produit, l'hydrogène gazeux et éventuellement un mélange d'hydrocarbures tandis que le contre-courant s'écoule vers l'étape d'isomérisation.

9. Procédé selon l'une quelconque des revendications 1-8, **caractérisé en ce que**, dans l'étape d'isomérisation la pression est plus élevée que dans l'étape d'hydrodésoxygénation.

10. Procédé selon l'une quelconque des revendications 1-9, **caractérisé en ce que** les étapes d'hydrodésoxygénation et d'isomérisation sont effectuées dans le même récipient sous pression ou dans des récipients sous pression séparés.

11. Procédé selon l'une quelconque des revendications 1-10, **caractérisé en ce que** la préhydrogénation est réalisée dans le même récipient sous pression que les étapes hydrodésoxygénation et d'isomérisation, ou dans un récipient sous pression séparé.

12. Procédé selon l'une quelconque des revendications 1-11, **caractérisé en ce que** la préhydrogénation et/ou l'hydrodésoxygénation sont effectuées en présence d'un catalyseur d'hydrogénation, ledit catalyseur d'hydrogénation contenant un métal du groupe VIII et/ou VIB du système périodique.

13. Procédé selon la revendication 12, **caractérisé en ce que** le catalyseur d'hydrogénation est un catalyseur Pd, Pt, Ni, NiMo ou CoMo supporté, le support étant l'alumine et/ou la silice.

14. Procédé selon l'une quelconque des revendications 1-13, **caractérisé en ce qu'**un catalyseur d'isomérisation est utilisé dans l'étape d'isomérisation et le catalyseur d'isomérisation comprend un tamis moléculaire.

15. Procédé selon la revendication 14, **caractérisé en ce que** le métal du groupe d'éléments VIII a été ajouté au catalyseur d'isomérisation.

16. Procédé selon les revendications 14 ou 15, **caractérisé en ce que** le catalyseur d'isomérisation contient Al₂O₃ ou SiO₂.

17. Procédé selon l'une quelconque des revendications 14-16, **caractérisé en ce que** le catalyseur d'isomérisation contient SAPO-11 ou SAPO-41 ou ZSM-22 ou ZSM-23 ou de la ferriérite et Pt ou Pd ou Ni et Al₂O₃ ou SiO₂.
